# EUROPÄISCHE PATENTSCHRIFT

(11) **EP 3 380 640 B1**
(45) Veröffentlichungstag und Bekanntmachung des Hinweises auf die Patenterteilung: **27.02.2019**
(21) Anmeldenummer: 15801757.4
(22) Anmeldetag: 25.11.2015
(51) Int. Cl.: C22C 21/16, C22F 1/057

(54) **ROHR ZUR VERWENDUNG IM ZUSAMMENHANG MIT EINER TIEFBOHRUNG**
TUBE FOR USE IN CONJUNCTION WITH A DEEP DRILLED HOLE
TUBE À UTILISER EN ASSOCIATION AVEC UN FORAGE PROFOND

(43) Veröffentlichungstag der Anmeldung: 03.10.2018
(73) Patentinhaber: Otto Fuchs - Kommanditgesellschaft -, 58540 Meinerzhagen (DE)
(72) Erfinder: BECKER, Joachim, 58540 Meinerzhagen (DE); KAUFMANN, Peter, 58540 Meinerzhagen (DE); DOMKE, Reinhart, 58540 Meinerzhagen (DE); WITULSKI, Thomas, 58540 Meinerzhagen (DE)
(74) Vertreter: Haverkamp, Jens
(86) Internationale Anmeldenummer: PCT/EP2015/077622
(87) Internationale Veröffentlichungsnummer: WO 2017/088914

(56) Entgegenhaltungen:
- DE-B- 1 148 508
- US-A1- 2009 159 159

## Beschreibung

Die Erfindung betrifft ein Rohr zur Verwendung im Zusammenhang mit einer Tiefbohrung, umfassend ein Leichtmetallrohr aus einer Al-Legierung mit in Längsrichtung des Rohres angeordneten Abschnitten unterschiedlicher Wandstärke und jeweils einer Kupplung an jedem Ende zum Anschließen des Rohres an ein weiteres Rohr. Ferner betrifft die Erfindung ein Verfahren zum Herstellen eines Leichtmetallrohres für ein solches Rohr.

Derartige Rohre werden bei Tiefbohrungen beispielsweise als Bohrrohre zur Ausbildung eines Bohrgestänges eingesetzt, beispielsweise bei der Erdöl- und Erdgasexploration und -förderung. Eingesetzt werden können derartige Rohre auch zur Ausbildung einer Steigleitung und/oder einer Verrohrung. Eingesetzt werden derartige Rohre auch für Tiefbohrungen, die anderen Zwecken dienen, beispielsweise der Wasser- oder Wärmegewinnung. Für die Durchführung einer Bohrung werden eine Vielzahl derartiger als Bohrrohre ausgebildete Rohre benötigt, die an ihren Enden jeweils eine Kupplung aufweisen. Bei diesen Rohrverbindungskupplungen handelt es sich entweder um eigenständige Bauteile, die mit dem Rohr verbunden sind oder in die Enden der Rohre eingebracht sind. Im Zuge des Bohrvorschrittes werden diese miteinander verbunden und bilden ein Bohrgestänge. Das Bohrgestänge und damit jedes einzelne darin verbaute Bohrrohr muss den auf das Bohrgestänge einwirkenden Kräften standhalten. Dieses betrifft vornehmlich eine Übertragung des zum Erzielen eines Bohrvorschrittes notwendigen Drehmomentes, welches in das Bohrgestänge eingekoppelt und über dieses bis zum Bohrkopf übertragen werden muss. Derartige Bohrgestänge können mehrere Kilometer lang sein. Ein solches Bohrrohr muss auch den axialen Zugbelastungen Stand halten, die auf dieses vor allem beim Herausziehen des Bohrgestänges wirken. Neben der mechanischen Belastung sind derartige Bohrrohre im Bohrloch auch chemischen Belastungen ausgesetzt, und zwar auch durch das Einwirken der Spülflüssigkeit und der darin gelösten Stoffe. Ähnliches gilt auch für den Fall, dass die Rohre im Rahmen einer Steigleitung und/oder als Verrohrung vorgesehen sind.

Bohrrohre aus hochfesten Stahllegierungen genügen diesen Anforderungen. Diese haben jedoch zum Nachteil, dass vor allem bei längeren Bohrgestängen das Gewicht des Bohrgestänges beträchtlich ist. Um diesbezüglich Abhilfe zu schaffen, sind Bohrrohre entwickelt worden, die aus einem Leichtmetallrohr und daran endseitig angeschlossenen Kupplungsstücken, typischerweise aus Stahl bestehen. Aufgrund des gegenüber Stahl erheblich geringeren spezifischen Gewichtes einer Aluminiumlegierung sind derartige Bohrrohre gegenüber solchen aus Stahl entsprechend leichter. Dieses wirkt sich positiv auf den Bohrrohrtransport, die Handhabung der Bohrrohre am bzw. auf dem Bohrturm und auf das zum Antreiben des Bohrgestänges benötigte Antriebsaggregat aus. Werden Kupplungsstücke als Kupplungen eingesetzt, sind diese typischerweise durch Aufschrumpfen an dem jeweilige Ende des Leichtmetallrohres befestigt. Bekannt ist ein solches Bohrrohr mit einem Leichtmetallrohr und mit an dessen Enden angeschlossene Stahlkupplungen aus DE 11 48 508.

Eingesetzt wird für die Herstellung des Leichtmetallrohres dieses vorbekannten Bohrrohres eine Aluminiumlegierung des Typs AA 2014 oder AA 7075. Bei beiden Legierungstypen handelt es sich um hochfeste Aluminiumlegierungen, die ihre Festigkeit aufgrund der besonderen Legierungszusammensetzung und dem Warmaushärteprozess erhalten. Hergestellt werden derartige Leichtmetallrohre typischerweise durch Strangpressen. Anschließend werden die stranggepressten Rohre durch Recken um 1 - 1,5% gerichtet, um eine darin unter Umständen eingebrachte Krümmung zu beseitigen. Abschließend werden die gereckten Leichtmetallrohre warm ausgehärtet. Bei der Legierung des Typs AA 2014 handelt es sich um eine Aluminiumlegierung des Typs AlCu4SiMg. Bei der Legierung des Typs AA 7075 handelt es sich um eine Legierung des Typs AlZn5.5MgCu.

Bei Leichtmetallbohrrohren ist man dazu übergegangen, das Leichtmetallrohr derselben mit Abschnitten unterschiedlicher Wanddicke in Längserstreckung, sogenannte "tailored tubes" herzustellen. Das Leichtmetallrohr eines solchen Bohrrohres verfügt typischerweise über drei Abschnitte mit einer größeren Wanddicke, die jeweils durch einen Abschnitt mit geringerer Wanddicke voneinander getrennt sind. Zwei der Abschnitte mit größerer Wanddicke bilden die Endabschnitte des Rohres. Diese Abschnitte sind gegenüber dem benachbarten Abschnitt mit einer größeren Wanddicke ausgestattet, damit diese in nachfolgenden Bearbeitungsschritten zum Anschließen der Kupplungen bearbeitet werden können. Ein dritter Abschnitt größerer Wanddicke befindet sich mittig zwischen den beiden Endabschnitten und dient als Verschleißpolster. Die Übergänge zwischen den Abschnitten unterschiedlicher Wanddicke sind kontinuierlich. Um solche Leichtmetallrohre für ein Bohrrohr der genannten Art mit der notwendigen Festigkeit herzustellen, wird es als erforderlich angesehen, eine Aluminiumlegierung einzusetzen, die infolge der Zusammensetzung der Legierung und der Warmaushärtbarkeit die notwendige Festigkeit erhält, um sicherzustellen, dass alle Bestandteile des Rohres dieselben Festigkeitswerte aufweisen.

Neben Aluminiumlegierungen dieses Typs (AA 2014 bzw. AA 7075) sind auch andere hochfeste Al-Legierungen bekannt, die ihre Festigkeit erst durch einen Reckprozess erhalten. Bei derartigen Legierungen handelt es sich um reckempfindliche Al-Legierungen, wie diese für Flugzeugbauteile, beispielsweise als Längsspanten eingesetzt werden. Derartige Bauteile weisen über ihre Längserstreckung eine gleich bleibende Wanddicke auf, so dass durch den Reckvorgang die gewünschten Festigkeitswerte über die gesamte Länge des Bauteils eingestellt werden können. Dieses ist jedoch bei Bauteilen mit Abschnitten unterschiedlicher Wanddicke in Längserstreckung und damit in Reckrichtung nicht möglich, da bei dem Vorgang des Reckens in Abhängigkeit von dem Unterschied in der Wanddicke vornehmlich oder sogar ausschließlich nur die Abschnitte mit der geringeren Wanddicke gereckt werden mit dem Ergebnis, dass sich die gewünschte Festigkeit zwar in diesen Abschnitten einstellen lässt, nicht jedoch in den Abschnitten größerer Wanddicke.

Auch wenn mit der Aluminiumlegierung AA 2014 oder AA 7075 Leichtmetallrohre mit Abschnitten unterschiedlicher Wanddicke zur Herstellung eines Bohrrohres mit derzeitig als hinreichend angesehenen Festigkeiten hergestellt werden können, entsprechen diese Festigkeitswerte nicht denjenigen von Stahlbohrrohren. Aus diesem Grunde können für tiefere Bohrungen, die ein längeres Bohrgestänge benötigen, für welche Anwendungen man gerne Leichtmetallbohrrohre zur Verfügung hätte, diese gerade nicht eingesetzt werden. Ist die Festigkeit der Bohrrohre nicht hinreichend, kann die Bohrtätigkeit nur mit begrenztem Drehmoment durchgeführt werden. Dieses beeinträchtigt die Bohrleistung. Überdies zeigt sich, dass die Korrosionsbeständigkeit von aus diesen Aluminiumlegierungen hergestellten Leichtmetallbohrrohren, gerade im korrosiven Milieu eines Bohrloches und der darin enthaltenen Spülflüssigkeit unbeständig ist. Dieses ist für die Praxis unerwünscht, da dann die Korrosion nicht kontrollierbar ist und daher die eingesetzten Bohrrohre einer oftmaligen Korrosionskontrolle unterworfen werden müssen.

Aus US 2009/0159159 A1 ist ein gewalztes Produkt für eine Luftfahrtanwendung bekannt, das aus einer Al-Li-Legierung hergestellt ist und eine Dicke von zumindest 30 mm aufweist. Diese Legierung enthält 2,2 - 3,9 Gew.-% Cu, 0,7 - 2,1 Gew.-% Li, 0,2 - 0,8 Gew.-% Mg, 0,2 - 0,5 Gew.-% Mn, 0,04 - 0,18 Gew.-% Zr, < 0,05 Gew.-% Zn und fakultativ 0,1 - 0,5 Gew.-% Ag, Rest Aluminium und unvermeidbare Verunreinigungen.

Ausgehend von diesem diskutierten Stand der Technik liegt der Erfindung daher die Aufgabe zugrunde, ein Rohr zur Verwendung im Zusammenhang mit Tiefbohrungen und somit beispielsweise als Bohrrohr ausgebildet, mit einem Leichtmetallrohr aus einer Al-Legierung sowie ein Verfahren zum Herstellen eines solchen Rohres vorzuschlagen, welches gegenüber herkömmlichen Leichtmetallrohren, hergestellt aus einer Aluminiumlegierung gemäß AA 2014 oder AA 7075, nicht nur verbesserte Eigenschaften aufweist, sondern sich ebenfalls zur Herstellung von Rohren mit Abschnitten unterschiedlicher Wanddicke eignet.

Gelöst wird diese Erfindung durch ein eingangs genanntes, gattungsgemäßes Rohr, bei dem das Leichtmetallrohr aus einer Al-Legierung hergestellt ist, die folgende Zusammensetzung aufweist:
2,5 - 5,0 Gew.-% Cu,
0,2 - 1,0 Gew.-% Mg,
0,8 - 2,0 Gew.-% Li,
max. 0,15 Gew.-% Si,
max. 0,15 Gew.-% Fe,
max. 0,5 Gew.-% Mn,
max. 1,0 Gew.-% Zn,
max. 0,1 Gew.-% Ti,
max. 0,5 Gew.-% Ag,
sowie fakultativ ein oder mehrere der nachfolgenden Elemente:
- max. 0,2 Gew.-% Cr,
- max. 0,2 Gew.-% Zr,
- max. 0,2 Gew.-% Sc,
- max. 0,2 Gew.-% Hf,
- max. 0,2 Gew.-% V,
wobei die Summe der Elemente Cr, Zr, Sc, Hf und V 0,3 Gew.-% nicht überschreitet, Rest Al nebst unvermeidbaren Verunreinigungen.

Bei den Legierungszusammensetzungen, die im Rahmen dieser Ausführungen beschrieben sind, können unvermeidbare Verunreinigungen je Element von 0,05 Gew.-% enthalten sein, wobei die Gesamtmenge an Verunreinigungen 0,15 Gew.-% nicht überschreiten sollte. Es ist jedoch bevorzugt, die Verunreinigungen möglichst gering zu halten, sodass diese je Element einen Anteil von 0,02 Gew.-% und eine Gesamtmenge von 0,8 Gew.-% nicht überschreiten.

Die verfahrensbezogene Aufgabe wird durch ein Verfahren gelöst, bei dem das Leichtmetallrohr im Wege eines Strangpressverfahrens geformt und anschließend lösungsgeglüht wird, bei dem das stranggepresste Rohr anschließend über seine gesamte Länge gereckt wird, und zwar soweit, dass der oder die Abschnitte mit der geringsten Wanddicke um zumindest 2 bis 2,5 % gereckt werden und bei dem das gereckte Leichtmetallrohr in einem nachfolgenden Prozessschritt bei einer Temperatur zwischen 164°C und 180°C warm ausgelagert wird.

Bei dem Konzept des beanspruchten Rohres sowie bei dem vorgenannten Herstellungsverfahren zum Herstellen des Leichtmetallrohres haben sich die Erfinder über das eingangs umrissene Vorurteil hinweggesetzt, dass man für Rohre mit Abschnitten unterschiedlicher Wandstärke keine reckempfindliche Al-Legierung einsetzen könne. Tatsächlich handelt es sich bei der Al-Legierung, aus der das Leichtmetallrohr für das Rohr typischerweise mit einem Strangpressverfahren hergestellt wird, um eine reckempfindliche Legierung, mithin eine Legierung, bei deren Verwendung die daraus hergestellten Bauteile zu recken sind, sollen diese Bauteile besonderen Festigkeitsanforderungen genügen. Dieses ist bei Rohren der beanspruchten Art der Fall. Schließlich sind diese zum Einsatz im Zusammenhang mit Tiefbohrungen und somit beispielsweise als Bohrrohre vorgesehen.

Unabhängig davon, ob ein aus dieser Legierung hergestelltes Leichtmetallrohr in Längserstreckung Abschnitte mit unterschiedlichen Wanddicken aufweist, weisen diese nicht nur verbesserte Festigkeitseigenschaften auf, sondern die daraus hergestellten Leichtmetallrohre erweisen sich vor allem auch gegenüber dem aggressiven Milieu in einem Bohrloch korrosionsbeständig. Dieses ist gerade für die Praxis ein erheblicher Vorteil. Die Festigkeitswerte können um mehr als 20%, typischerweise sogar um 30 - 50% gesteigert werden. Eine kritische Größe gerade bei Rohren für den Einsatzzweck im Zusammenhang mit Tiefbohrungen ist auch deren Spannungsrisskorrosionsbeständigkeit. Gegenüber herkömmlichen Rohren aus einer Al-Legierung gemäß AA 7075 wird die Spannungsrisskorrosionsbeständigkeit signifikant verbessert. Die Rohre gemäß der Erfindung erweisen sich auch gegenüber solchen aus einer Al-Legierung gemäß AA 2014 in Bezug auf ihre Spannungsrisskorossionsbeständigkeit deutlich verbessert. Untersuchungen haben gezeigt, dass diese sogar mehr als 3-fach besser ist als bei einem Rohr, hergestellt aus einer Legierung AA 2014. Ebenso wie die typischen Festigkeitswerte ist bei einem Rohr mit einem Leichtmetallrohr aus einer Legierung, wie beansprucht, die Schwingfestigkeit in entsprechendem Maße verbessert.

In geschickter Weise kann zudem bei einem Leichtmetallrohr aus einer solchen Legierung mit Wandabschnitten unterschiedlicher Wanddicke das unterschiedliche Reckverhalten genutzt werden, und zwar vor einer zur abschließenden Einstellung der Festigkeit durchgeführten Warmauslagerung. Durch das Recken in den Abschnitten mit der dünneren Wanddicke, wobei das Recken um zumindest 2 - 2,5%, vorzugsweise jedoch sogar um 4 - 4,5% und mehr durchgeführt wird, welche Reckangaben sich auf die Abschnitte der geringsten Wanddicke beziehen, werden die Abschnitte mit größerer Wanddicke nicht oder nur sehr untergeordnet gereckt. Dieses ist abhängig von dem Wanddickenunterschied zwischen den Abschnitten mit geringerer Wanddicke und denjenigen mit größerer Wanddicke. Dies hat zur Folge, dass die Abschnitte mit größerer Wanddicke durch den Reckprozess weniger oder gar nicht beeinflusst sind. Im Zuge der anschließenden Warmauslagerung mit der damit verbundenen Aushärtung wird die Endfestigkeit auch in den Abschnitten größerer Wanddicke eingestellt. Die hierdurch erzielten Festigkeitswerte sind typischerweise etwas geringer als diejenigen Festigkeitswerte, die infolge des Reckens in den Abschnitten geringerer Wanddicke zu beobachten sind. Dieses ist jedoch unproblematisch, da die in diesen Abschnitten geringere Festigkeit durch die vorhandene größere Wanddicke kompensiert wird. Insofern haben die Erfinder bei der Konzeption dieser Erfindung auch das Vorurteil überwunden, dass ein Bohrrohr mit Abschnitten unterschiedlicher Wanddicke über die gesamte Länge eine einheitliche Materialfestigkeit aufweisen muss.

Für die Herstellung eines solchen Leichtmetallrohres eignet sich beispielsweise eine Al-Legierung gemäß AA 2195.

Im Rahmen einer für eine Legierung AA 2195 vorgesehenen Warmauslagerung bei 153°C können hinreichende Festigkeiten für das Leichtmetallrohr zur Verwendung beispielsweise als Teil eines Bohrrohrs eingestellt werden, wenn der Unterschied in der Wanddicke zwischen dem Abschnitt mit der geringsten Wanddicke und demjenigen der größten Wanddicke kleiner als 1,2 ist. Um hinreichende Festigkeiten für das aus einer solchen Al-Legierung hergestellte Rohr auch dann zu gewährleisten, wenn die Wanddicke der Abschnitte größerer Wanddicke mehr als das 1,2-Fache der Abschnitte der geringeren Wanddicke betragen, wurde ein neues Warmauslagerungsverfahren entwickelt. Einfluss nimmt in diese Konzeption auch, dass die Zeit der Warmauslagerung nicht überlang bemessen sein soll, um den Herstellungsprozess nicht unnötig zu verteuern. Hinreichende Festigkeiten bei einem Leichtmetallrohr aus der erfindungsgemäßen Legierung mit unterschiedlicher Wandstärke in einzelnen Abschnitten lassen sich auch bei größeren Wanddickenunterschieden erreichen, wenn die Warmauslagerung bei einer erhöhten Temperatur, und zwar zwischen 164°C und 180°C durchgeführt wird, typischerweise für 24 - 38 Stunden. Besonders bevorzugt ist eine Warmauslagerung für 36 Stunden bei 170°C oder etwa 170°C.

Ausgehend von dem für AA 2195 bekannten Warmaushärteverfahren, welches, den Vorgaben entsprechend, bei einer Temperatur von 153°C durchgeführt wird, war allerdings bekannt, dass bei höheren Warmauslagerungstemperaturen die zu erzielende Endfestigkeit wieder abnimmt. Unerwartet ist jedoch, dass bei einer Warmauslagerung in dem genannten Temperaturfenster die Angleichung in der Festigkeit der nicht oder weniger stark gereckten Abschnitte des Rohres zu denjenigen, die maximal gereckt worden sind, verbessert ist, mithin der Unterschied in den Festigkeiten dieser Abschnitte des Leichtmetallrohres relativ gering ausfällt. In jedem Fall können mit diesem Verfahren selbst in ungereckten Abschnitten des Rohres Festigkeiten erzielt werden, die gegenüber den Festigkeiten eines herkömmlichen Leichtmetallrohres verbessert sind.

Besonders gute Eigenschaften für das Leichtmetallrohr lassen sich erzielen, wenn die Al-Legierung ausschließlich die vorgenannten Legierungselemente mit den beanspruchten Anteilen aufweist.

Für die Zwecke des Herstellens eines Leichtmetallrohres für ein Rohr der in Rede stehenden Art und deren vorgesehene Verwendung im Zusammenhang mit einer Tiefbohrung kann eine weitere Verbesserung in den Eigenschaften erzielt werden, wenn das Leichtmetallrohr aus einer Legierung mit folgenden Legierungselementen hergestellt ist:
3,5 - 4,5 Gew.-% Cu,
0,2 - 0,8 Gew.-% Mg,
0,8 - 1,3 Gew.-% Li,
0,1 - 0,4 Gew.-% Mn,
0,02 - 0,07 Gew.-% Ti,
max. 0,15 Gew.-% Si,
max. 0,15 Gew.-% Fe,
Rest Al nebst unvermeidbaren Verunreinigungen.

In einer bevorzugten Weiterbildung dieser Legierungszusammensetzung beträgt der Mg-Anteil zwischen 0,28 und 0,4 Gew.-% und der Mn-Anteil zwischen 0,01 und 0,25 Gew.-%.

Mit dieser Legierung kann die Festigkeit des Leichtmetallrohres nochmals gesteigert werden, wobei insbesondere der Mn-Gehalt sich festigkeitssteigernd auswirkt.

In einer alternativen Ausgestaltung wird folgende Legierungszusammensetzung eingesetzt:
3,5 - 4,5 Gew.-% Cu,
0,2 - 0,8 Gew.-% Mg,
0,8 - 1,3 Gew.-% Li,
0,1 - 0,4 Gew.-% Mn,
0,02 - 0,07 Gew.-% Ti,
0,2 - 0,5 Gew.-% Ag,
max. 0,15 Gew.-% Si,
max. 0,15 Gew.-% Fe,
max. 0,5 Gew.-% Ag,
Rest Al nebst unvermeidbaren Verunreinigungen.

Bei dieser Legierung wirkt sich der Ag-Gehalt festigkeitssteigernd aus. Aus Kostengründen wird man vermutlich für einen industriellen Maßstab die Aghaltige Variante nicht wählen. Den gleichen Effekt hat eine Beimengung des Elementes Ag auch in den zuvor genannten Legierungen.

Die Anwesenheit von Li in der Legierung wirkt sich nicht nur festigkeitssteigernd aus, sondern hierdurch wird auch das spezifische Gewicht gering gehalten. Die vorgenannten Legierungen weisen ein spezifisches Gewicht auf, welches um einige Prozentpunkte unterhalb dem spezifischen Gewicht der Legierung AA 2014 liegt.

Der Li-Gehalt ist an die Cu- und Mg-Gehalte der Legierung angepasst, und zwar dergestalt, dass zwar ein gewisser Li-Anteil in die Legierung eingebaut wird, jedoch nur so viel, dass dieses in Lösung gebracht wird und keine unerwünschten Li-haltigen Phasen entstehen. Aus diesem Grunde ist der Li-Gehalt der Legierung auf den engen Bereich zwischen 0,8 und 2,0 Gew.-% begrenzt.

Magnesium trägt zu den gewünschten Eigenschaften des aus dieser Legierung hergestellten Rohres bei, ist jedoch nur mit dem genannten Anteil zugelassen, damit sich keine unerwünschten Phasen (wie z.B. die S-Phase Al₂CuMg) ausbilden. Unter Berücksichtigung der weiteren Legierungselemente soll der Mg-Anteil 1,0 Gew.-% nicht überschreiten.

Die zugelassenen Fe- und Si-Anteile werden zumeist als Verunreinigung durch Recycling von Vorprodukten in die Legierung eingebracht. Diese beeinträchtigen die gewünschten Eigenschaften des daraus hergestellten Leichtmetallrohres nicht.

Nachfolgend ist die Erfindung anhand eines Ausführungsbeispiels unter Bezugnahme auf die beigefügten Figuren. Es zeigen:
- **Fig. 1:**: einen schematisierten Längsschnitt durch ein Leichtmetallrohr,
- **Fig. 2:**: ein Diagramm, darstellend den Dehngrenzenverlauf über die Warmaushärtungszeit bei einer Warmauslagerung bei 170°C nach X% Recken,

- **Fig. 3:**: ein Diagramm, darstellend den Dehngrenzenverlauf über die Warmaushärtungszeit bei einer Warmauslagerung mit Bedingungen gemäß dem Stand der Technik und
- **Fig. 4:**: ein Diagramm zum Darstellen der Fließgrenze bzw. der Reisfestigkeit eines erfindungsgemäßen Rohres in Zusammenschau mit dem Reckgrad desselben.

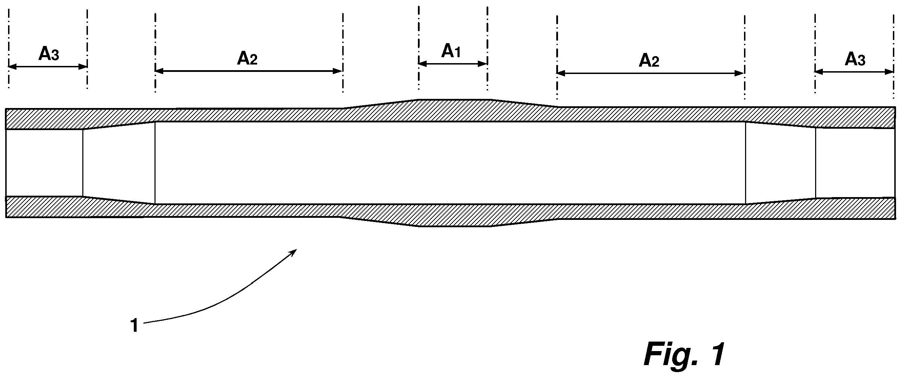

Figur 1 zeigt einen schematisierten Längsschnitt durch ein Leichtmetallrohr 1 zur Ausbildung eines Bohrrohres, wie diese für Tiefbohrungen verwendet werden. Das in Figur 1 gezeigte Leichtmetallrohr 1 ist in seiner Längserstreckung nicht maßstäblich gezeigt. Das Längen/Durchmesser-Verhältnis ist tatsächlich sehr viel kleiner als in dieser Schemazeichnung wiedergegeben.

Das Leichtmetallrohr 1 weist in Längserstreckung Abschnitte unterschiedlicher Wanddicke auf. Das Rohr 1 des dargestellten Ausführungsbeispiels ist in Bezug auf seine Mitte symmetrisch in Richtung zu seinen Enden hin ausgelegt. Der mittlere Abschnitt A₁ des Leichtmetallrohres 1 weist eine gegenüber benachbarten Abschnitten größere Wanddicke auf. Benachbart zu dem Abschnitt A₁ befinden sich zu seinen beiden Seiten Abschnitte A₂ geringerer Wandstärke. Zwischen den Abschnitten A₁ und A₂ ist jeweils ein kontinuierlicher Übergang vorgesehen, wobei sich die Wanddicke allmählich von dem Abschnitt A₂ zu dem Abschnitt A₁ hin vergrößert. Benachbart zu den Abschnitten A₂ ist jeweils ein Endabschnitt A₃, der wiederum gegenüber dem Abschnitt A₂ eine größere Wanddicke aufweist. Auch zwischen den Abschnitten A₂ und A₃ befindet sich jeweils ein Übergangsabschnitt, in dem die Wanddicke von der Wanddicke des Abschnittes A₂ kontinuierlich und allmählich in die Wanddicke des Abschnittes A₃ übergeht. Der Wanddickenunterschied zwischen den Abschnitten A₁, A₃ und A₂ beträgt etwa das 2-fache.

Es versteht sich, dass das Leichtmetallrohr in Bezug auf seine Mitte in Längserstreckung nicht notwendigerweise symmetrisch ausgelegt sein muss.
Hergestellt worden ist das in Figur 1 gezeigte Leichtmetallrohr aus einer Al-Legierung mit folgender Zusammensetzung:

| Al | Si | Fe | Cu | Mn | Mg | Li | Zn | V | Ti | Zr | Ag |
|---|---|---|---|---|---|---|---|---|---|---|---|
| 94,27 | 0,02 | 0,04 | 3,86 | 0,01 | 0,38 | 0,8 | 0,02 | 0,005 | 0,03 | 0,1 | 0,36 |

Das nach dem Stranggießen homogenisierte und dann stranggepresste Leichtmetallrohr wurde nach dem Formen im Wege eines Strangpressprozesses lösungsgeglüht und anschließend gereckt, und zwar soweit, dass der Reckgrad in den Abschnitten A₂ mit der geringsten Wandstärke 4,6 % beträgt. Aufgrund des Wanddickenunterschiedes zwischen den Abschnitten A₂ und den Abschnitten A₁ bzw. A₃ verbleiben diese Abschnitte durch den Reckprozess unbeeinflusst.

Die Endabschnitte A₃ sind gegenüber den benachbarten Abschnitten A₂ verdickt, da in deren äußere Mantelfläche Konturen eingearbeitet werden sollen, um bei dem beschriebenen Ausführungsbeispiel daran ein Kupplungsstück anschließen zu können. Erst mit den in der Figur nicht gezeigten Kupplungsstücken bildet das Leichtmetallrohr 1 das eigentliche Bohrrohr aus. Es versteht sich, dass die verdickten Abschnitte A₃ auch genutzt werden können, um die Kupplungsgeometrien darin einbringen zu können. Die Bearbeitung der Abschnitte A₃ zum Einbringen der gewünschten Rückhaltegeometrie, wie beispielsweise Gewinde oder dergleichen wird nach dem Recken und dem Warmauslagern vorgenommen. Ausgenutzt wird hierbei der Umstand, dass diese Abschnitte A₃ des Leichtmetallrohres 1 durch den Reckprozess unbeeinflusst sind und somit durch diesen nicht verfestigt sind.

Bei der eingesetzten Legierung handelt es sich um eine reckempfindliche Legierung, wodurch die Wandabschnitte, die tatsächlich gereckt worden sind, in Abhängigkeit von dem Grad des Reckens entsprechend verfestigt sind. Dieses sind bei dem dargestellten Ausführungsbeispiel vor allem die Abschnitte A₂ und sukzessive abnehmend die Übergangsbereiche zu dem jeweils dickeren Wandabschnitt hin. Das Recken des Leichtmetallrohres 1 vor der Endenbearbeitung hat zur Folge, dass hierdurch das Rohr eine hinreichende Festigkeit und Formstabilität erfährt.

In einem nachfolgenden Schritt ist das Leichtmetallrohr 1 durch Warmauslagerungen einem Warmhärtprozess unterworfen worden. Die Warmauslagerung wurde bei 170°C für 36 Stunden durchgeführt. Im Zuge dieser Warmauslagerung hat sich die durch das Recken eingestellte Festigkeit in den Abschnitten A₂ etwas, jedoch nicht nennenswert, reduziert, jedoch sind die durch das Recken nicht verfestigten Abschnitte - die Abschnitte A₁, A₃ sowie die nicht gereckten Teile der Übergangsabschnitte - durch diesen Warmauslagerungsprozess warmgehärtet worden.

Aus dem Leichtmetallrohr 1 wurden aus den Abschnitten A₁, A₂ und A₃ Proben genommen um daran die Festigkeitswerte zu ermitteln. Die in diesem Zusammenhang ermittelten Festigkeitswerte sind der nachfolgenden Tabelle zu entnehmen:

| Lage | Richtung | Reckgrad [%] | Rₚ₀₂ [MPa] | Rₘ [MPa] | A_{g} [%] | A₅[%] |
|---|---|---|---|---|---|---|
| A₃ | L | 0,8 | 525 | 575 | 5,2 | 9,8 |
| A₂ | | 4,6 | 573 | 604 | 4,5 | 11,8 |
| A₁ | | 0 | 498 | 539 | 4,7 | 9,5 |
| A₂ | | 4,6 | 572 | 602 | 4,6 | 11,2 |
| A₃ | | 0,8 | 523 | 574 | 4,5 | 8,8 |
| A₃ | LT | 0,8 | 515 | 556 | 4,2 | 7,2 |
| A₂ | | 4,6 | 556 | 585 | 4,2 | 7,9 |
| A₁ | | 0 | 497 | 542 | 5,5 | 9,3 |
| A₂ | | 4,6 | 548 | 580 | 4,3 | 7,3 |
| A₃ | | 0,8 | 515 | 556 | 4,2 | 7,2 |

Bei den in der Tabelle aufgetragenen Festigkeitswerten handelt es sich um die 0,2%-Dehngrenze (Rₚ₀₂), die Zugfestigkeit (Rₘ), die Gleichmaßdehnung (A_{g}) und die Bruchdehnung (A₅).

Die in der Tabelle aufgeführten Festigkeitswerte, die bei dem Leichtmetallrohr erzielt worden sind, übersteigen diejenigen Festigkeitswerte, die bei einem Vergleichsrohr aus einer Legierung AA 2014 ermittelt worden sind um 20 % bis 30 %. Des Weiteren machen die Festigkeitswerte deutlich, dass sogar der ungereckte Abschnitt A₁ nach dem Warmaushärten hinreichende Festigkeiten aufweisen und dass der Festigkeitskontrast zwischen den Abschnitten geringerer Wanddicke A₂ und denjenigen größerer Wanddicke A₁, A₃ zwar vorhanden ist, jedoch nicht ins Gewicht fällt. Die in den Abschnitten größerer Wanddicke festgestellten geringeren Festigkeitswerte werden ohne Weiteres durch die vorhandene größere Wandstärke ausgeglichen.

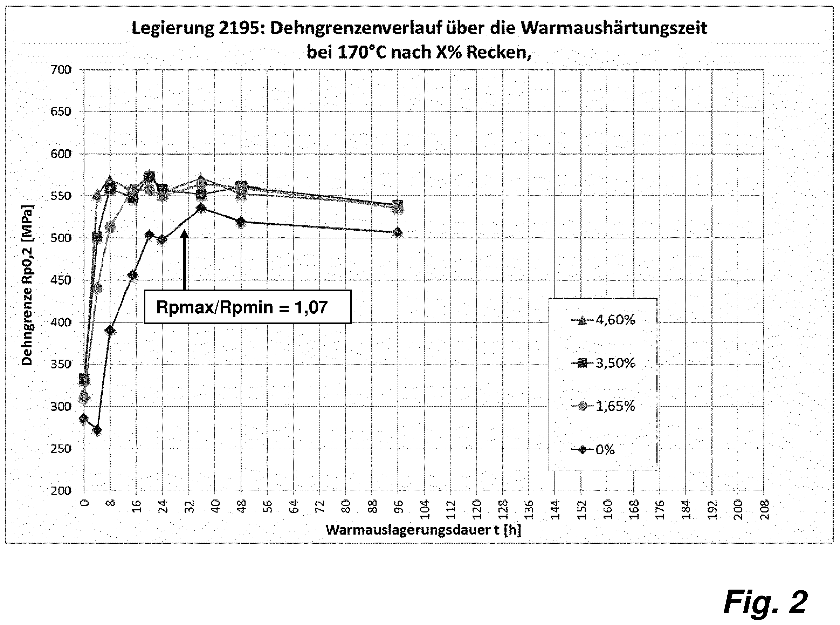

Figur 2 zeigt den Dehngrenzenverlauf über die Warmaushärtungszeit eines Rohres gemäß demjenigen der Figur 1 mit unterschiedlichem Reckgrad. Die Warmauslagerung wurde, wie vorstehend dargelegt, bei 170° C durchgeführt. Die Kurven zeigen, dass zum Einen eine Erhöhung der Warmauslagerungsdauer über 40 Stunden keine positiven Effekte mehr mit sich bringt. Mithin kann dieses kurz gehalten werden. Vor allem zeigt diejenige Kurve, die einen Bohrrohrabschnitt betrifft, der ungereckt verblieben ist, dass im Zuge der Warmauslagerung die Festigkeit auf ein hinreichend hohes Niveau angehoben werden konnte. Es versteht sich, dass die Festigkeit des Rohres in den ungereckten Abschnitten durch die entsprechende Wandaufdickung mehr als kompensiert wird.

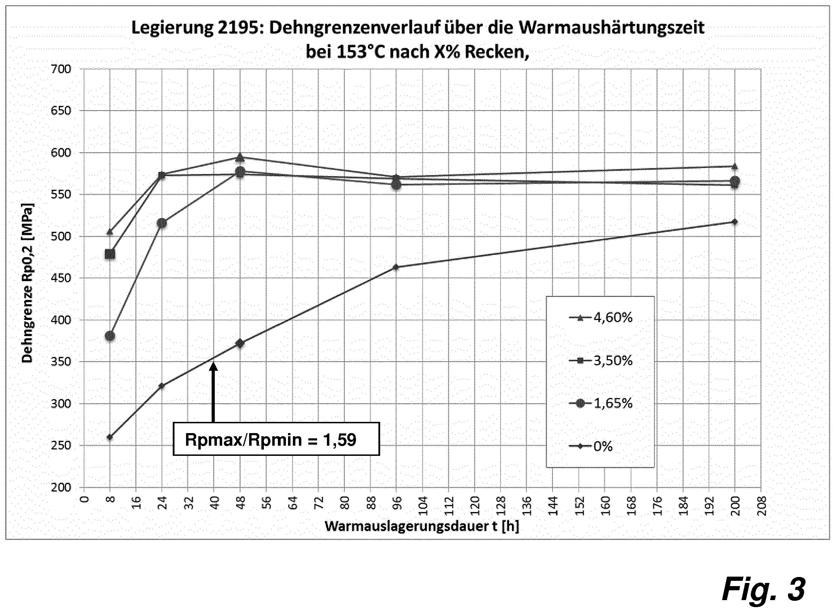

Figur 3 zeigt in einer Gegenüberstellung analoge Proben nach einem Warmauslagerungsversuch, wobei die Warmauslagerung mit Parametern aus dem Stand der Technik durchgeführt worden ist, und zwar bei 153° C. Zum Einen zeigt sich, dass die ungereckte Probe bzw. der ungereckte Rohrabschnitt erst nach einer Warmauslagerungszeit, die unvertretbar lang ist (>200h), Festigkeiten erreicht, die vertretbar sind. In derjenigen Auslagerungszeit, die für eine Warmauslagerung bei 170° C benötigt wird, um hinreichende Festigkeitseigenschaften zu erzielen, weisen bei einer Warmauslagerung bei 153°C die ungereckten Rohrabschnitte keine hinreichenden Festigkeitseigenschaften auf.

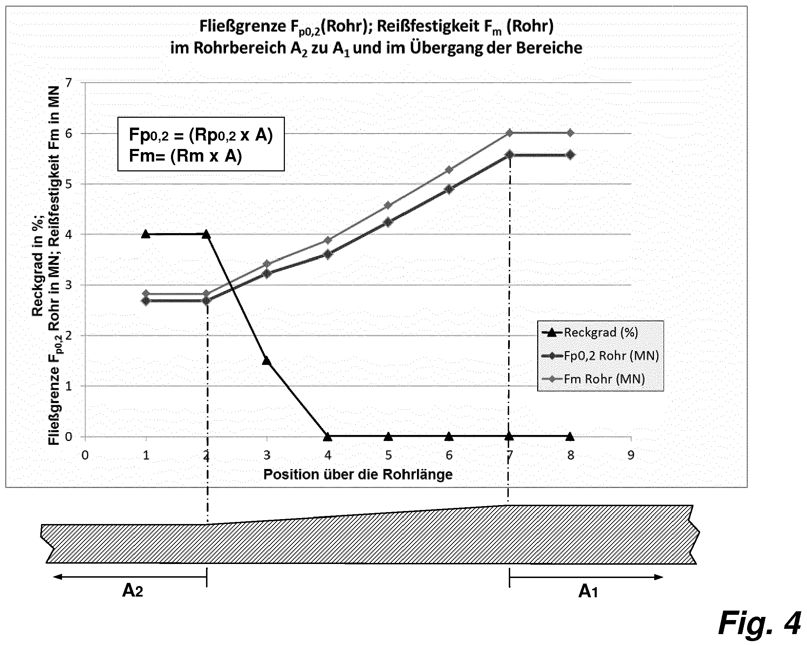

Figur 4 zeigt im Übergang von einem Abschnitt des Rohres 1 mit dünnerer Wandstärke - dem Abschnitt A₂ - zu einem Abschnitt mit dickerer Wandstärke - Abschnitt A₁ - das Reckverhalten sowie die Fließgrenze und die Reißfestigkeit. Bei dem vorbeschriebenen Recken des Rohres 1 wird dieses in den Abschnitten dünnerer Wandstärke um das gewünschte Maß (hier: 4%) gereckt. Dieser Reckgrad nimmt im Übergangsbereich von dem Abschnitt A₂ zu dem Abschnitt A₁ sukzessive ab. Bereits nach 2/5 der Übergangsstrecke in Richtung zu dem Wandabschnitt A₂ hin wird das Rohr nicht mehr gereckt.

In der Gegenüberstellung zu der Kurve des Reckgrades ist die Fließgrenze und die Reisfestigkeit aufgetragen. Der Anstieg der Fließgrenze und der Reißfestigkeit aus dem Rohrabschnitt A₂ mit dünnerer Wandstärke zu dem Rohrabschnitt A₁ mit größerer Wandstärke macht deutlich, dass die Erhöhung der Wandstärke die Nachteile des Nicht-Reckens in diesen Abschnitten mehr als kompensiert. Dass das Rohr 1 in den Bereichen größerer Wanddicke eine signifikant höhere Reißfestigkeit und Fließgrenze aufweist, liegt auch in dem vorbeschriebenen Warmauslagerungsverfahren begründet.

Die Erfindung ist anhand eines Ausführungsbeispiels beschrieben worden. Ohne den Umfang der geltenden Ansprüche zu verlassen, ergeben sich zahlreiche weitere Ausgestaltungen, die Erfindung umsetzen zu können.

## Patentansprüche

1. Rohr zur Verwendung im Zusammenhang mit einer Tiefbohrung, umfassend ein Leichtmetallrohr (1) aus einer Al-Legierung mit in Längsrichtung des Rohres angeordneten Abschnitten unterschiedlicher Wandstärke und jeweils einer Kupplung an jedem Ende zum Anschließen des Rohres an ein weiteres Rohr, **dadurch gekennzeichnet, dass** das Leichtmetallrohr (1) aus einer Al-Legierung hergestellt ist, die folgende Elemente enthält:
- 2,5 - 5,0 Gew.-% Cu,
- 0,2 - 1,0 Gew.-% Mg,
- 0,8 - 2,0 Gew.-% Li,
- max. 0,15 Gew.-% Si,
- max. 0,15 Gew.-% Fe,
- max. 0,5 Gew.-% Mn,
- max. 1,0 Gew.-% Zn,
- max. 0,1 Gew.-% Ti,
- max. 0,5 Gew.-% Ag,
sowie fakultativ ein oder mehrere der nachfolgenden Elemente:
- max. 0,2 Gew.-% Cr,
- max. 0,2 Gew.-% Zr,
- max. 0,2 Gew.-% Sc,
- max. 0,2 Gew.-% Hf,
- max. 0,2 Gew.-% V,
wobei die Summe der Elemente Cr, Zr, Sc, Hf und V 0,3 Gew.-% nicht überschreitet, Rest Al nebst unvermeidbaren Verunreinigungen.

2. Rohr nach Anspruch 1, **dadurch gekennzeichnet, dass** die Zusammensetzung der Al-Legierung des Leichtmetallrohres (1) folgende Zusammensetzung aufweist:
- 3,5 - 4,5 Gew.-% Cu,
- 0,2 - 0,8 Gew.-% Mg,
- 0,8 - 1,3 Gew.-% Li,
- 0,1 - 0,4 Gew.-% Mn,
- 0,02 - 0,07 Gew.-% Ti,
- max. 0,15 Gew.-% Si,
- max. 0,15 Gew.-% Fe,
- max. 0,5 Gew.-% Ag,
Rest Al nebst unvermeidbaren Verunreinigungen.

3. Rohr nach Anspruch 1 oder 2, **dadurch gekennzeichnet, dass** die Zusammensetzung der Al-Legierung des Leichtmetallrohres einen Ag-Gehalt von 0,2 - 0,5 Gew.-% aufweist.

4. Rohr nach einem der Ansprüche 1 bis 3, **dadurch gekennzeichnet, dass** die Zusammensetzung der Al-Legierung des Leichtmetallrohres (1) folgende Zusammensetzung aufweist:
- 3,0 - 3,5 Gew.-% Cu,
- 0,28 - 0,25 Gew.-% Mg,
- 0,9 - 1,2 Gew.-% Li,
- 0,28 - 0,40 Gew.-% Mn,
- 0,035 - 0,06 Gew.-% Ti,
- max. 0,15 Gew.-% Si,
- max. 0,15 Gew.-% Fe,
Rest Al nebst unvermeidbaren Verunreinigungen.

5. Rohr nach einem der Ansprüche 1 bis 4, **dadurch gekennzeichnet, dass** das Rohr in seinem Abschnitt der geringsten Wandstärke um zumindest 2 - 2,5 %, vorzugsweise sogar um zumindest 3,5 % gereckt worden ist.

6. Rohr nach einem der Ansprüche 1 bis 5, **dadurch gekennzeichnet, dass** das Leichtmetallrohr (1) an seinen beiden Enden jeweils einen Abschnitt mit größerer Wanddicke (A₃) aufweist, wobei die Abschnitte der größeren Wanddicke (A₃) durch jeweils einen Abschnitt geringerer Wanddicke (A₂) getrennt sind und wobei zwischen den Abschnitten größerer Wanddicke (A₃) und denjenigen geringerer Wanddicke (A₂) Übergangsabschnitte vorgesehen sind, in denen die Wanddicke von dem einen Abschnitt in den anderen Abschnitt kontinuierlich übergeht.

7. Rohr nach Anspruch 6, **dadurch gekennzeichnet, dass** zwischen den beiden Endabschnitten mit größerer Wanddicke (A₃) zumindest ein weiterer Abschnitt größerer Wanddicke (A₁) vorgesehen ist, welcher Abschnitt größerer Wanddicke (A₁) über einen Übergangsabschnitt in die benachbarten Abschnitte mit geringerer Wanddicke (A₂) übergeht.

8. Rohr nach Anspruch 6, **dadurch gekennzeichnet, dass** die Kupplungen in die Endabschnitte des Leichtmetallrohres (1) eingearbeitet sind.

9. Rohr nach einem der Ansprüche 1 bis 8, **dadurch gekennzeichnet, dass** es sich bei diesem um ein Bohrrohr zur Ausbildung eines Bohrgestänges handelt.

10. Verfahren zum Herstellen eines Leichtmetallrohres (1) für ein Rohr nach einem der Ansprüche 1 bis 9, **dadurch gekennzeichnet, dass** das Leichtmetallrohr (1) im Wege eines Strangpressverfahrens geformt und anschließend lösungsgeglüht wird, dass das stranggepresste Rohr anschließend über seine gesamte Länge gereckt wird, und zwar soweit, dass der oder die Abschnitte mit der geringsten Wanddicke (A₂) um zumindest 2 bis 2,5 % gereckt werden und das gereckte Leichtmetallrohr (1) in einem nachfolgenden Prozessschritt bei einer Temperatur zwischen 164°C und 180°C warm ausgelagert wird.

11. Verfahren nach Anspruch 10, **dadurch gekennzeichnet, dass** das stranggepresste Leichtmetallrohr (1) in seinen Abschnitten mit der geringsten Wanddicke (A₂) um wenigstens 3,5 %, insbesondere um etwa 4 - 4,5 % oder mehr gereckt wird.

12. Verfahren nach Anspruch 10 oder 11, **dadurch gekennzeichnet, dass** das gereckte Leichtmetallrohr (1) für 24 - 45 Stunden, insbesondere für 30 - 40 Stunden warm ausgelagert wird.

13. Verfahren nach einem der Ansprüche 10 bis 12, **dadurch gekennzeichnet, dass** die Warmauslagerung des gereckten Leichtmetallrohres (1) in einem Temperaturfenster zwischen 168°C und 172°C, insbesondere bei 170°C für 32 - 38 Stunden, insbesondere für etwa 36 Stunden durchgeführt wird.

## Claims

1. Tube for use in conjunction with a deep drilled hole, comprising a light metal tube (1) made of an aluminium alloy, having sections of different wall thicknesses arranged in the longitudinal direction of the tube and a respective coupling at each end for connecting the tube to a further tube, **characterised in that** the light metal tube (1) is produced from an aluminium alloy containing the following elements:
2.5 - 5.0 wt.% Cu
0.2 - 1.0 wt.% Mg
0.8 - 2.0 wt.% Li
max. 0.15 wt.% Si
max. 0.15 wt.% Fe
max. 0.5 wt.% Mn
max. 1.0 wt.% Zn
max. 0.1 wt.% Ti
max. 0.5 wt.% Ag
as well as optionally one or more of the following elements:
max. 0.2 wt.% Cr
max. 0.2 wt.% Zr
max. 0.2 wt.% Sc
max. 0.2 wt.% Hf
max. 0.2 wt.% V
wherein the total of the elements Cr, Zr, Sc, Hf and V does not exceed 0.3 wt. %, the remainder being Al and unavoidable impurities.

2. Tube according to claim 1, **characterised in that** the composition of the aluminium alloy of the light metal tube (1) exhibits the following composition:
3.5 - 4.5 wt. % Cu
0.2 - 0.8 wt. % Mg
0.8 - 1.3 wt. % Li
0.1 - 0.4 wt. % Mn
0.02 - 0.07 wt. % Ti
max. 0.15 wt. % Si
max. 0.15 wt. % Fe
max. 0.5 wt. % Ag
the remainder being Al and unavoidable impurities.

3. Tube according to claim 1 or 2, **characterised in that** the composition of the aluminium alloy of the light metal tube exhibits an Ag content of 0.2-0.5 wt. %.

4. Tube according to any one of claims 1 to 3, **characterised in that** the composition of the aluminium alloy of the light metal tube (1) exhibits the following composition:
3.0 - 3.5 wt. % Cu
0.28 - 0.25 wt. % Mg
0.9 - 1.2 wt.% Li
0.28 - 0.40 wt. % Mn
0.035 - 0.06 wt. % Ti
max. 0.15 wt. % Si
max. 0.15 wt. % Fe
the remainder being Al and unavoidable impurities.

5. Tube according to any one of claims 1 to 4, **characterised in that** the tube, in its section of least wall thickness, is drawn out by at least 2 - 2.5 %, and preferably even by at least 3.5%.

6. Tube according to any one of claims 1 to 5, **characterised in that** the light metal tube (1) comprises at both its ends in each case a section with greater wall thickness (A₃), wherein the sections of greater wall thickness (A₃) are separated in each case by a section of lesser wall thickness (A₂), and wherein transition sections are provided between the sections of greater wall thickness (A₃) and those of lesser wall thickness (A₂), in which the wall thickness transfers continuously from one section into the other section.

7. Tube according to claim 6, **characterised in that** at least one further section of greater wall thickness (A₁) is provided between the two end sections with greater wall thickness (A₃), this section of greater wall thickness (A₁) transfers via a transfer section into the adjacent sections with lesser wall thickness (A₂).

8. Tube according to claim 6, **characterised in that** the couplings are integrated into the end sections of the light metal tube (1).

9. Tube according to any ones of claims 1 to 8, **characterised in that** this is a drilling tube for forming a drill pipe or drill stem.

10. Method for producing a light metal tube (1) for a tube in accordance with any one of claims 1 to 9, **characterised in that** the light metal tube (1) is shaped by way of an extrusion process and is then solutionised, that the extruded tube is then drawn over its entire length, and specifically so far that the section or sections with the least wall thickness (A₂) are drawn by at least 2 to 2.5 %, and the drawn light metal tube (1) is heat hardened in a subsequent process step at a temperature between 164°C and 180°C.

11. Method according to claim 10, **characterised in that** the extruded light metal tube (1) is drawn in its sections with the least wall thickness (A₂) by at least 3.5 %, and in particular by some 4 - 4.5 % or more.

12. Method according to claim 10 or 11, **characterised in that** the extruded light metal tube (1) is heat-hardened for 24-45 hours, in particular for 30-40 hours.

13. Method according to any one of claims 10 to 12, **characterised in that** the heat hardening of the drawn light metal tube (1) is carried out in a temperature window of between 168°C and 172°C, in particular at 170 °C for 32 - 38 hours, in particular for some 36 hours.

## Revendications

1. Tube à utiliser en association avec un forage profond, comprenant un tube (1) en métal léger en alliage d'Al, avec des tronçons d'une épaisseur de paroi variable disposés dans le sens longitudinal du tube et un accouplement à chaque extrémité afin de raccorder un autre tube au tube, **caractérisé en ce que** le tube (1) en métal léger est fabriqué dans un alliage d'Al lequel contient les éléments suivants :
- 2,5 à 5,0 % de poids de Cu,
- 0,2 à 1,0 % de poids de Mg,
- 0,8 à 2,0 % de poids de Li,
- max. 0,15 % de poids de Si,
- max. 0,15 % de poids de Fe,
- max. 0,5 % de poids de Mn,
- max. 1,0 % de poids de Zn,
- max. 0,1 % de poids de Ti,
- max. 0,5 % de poids d'Ag,
ainsi que, à titre facultatif, un ou plusieurs des éléments suivants :
- max. 0,2 % de poids de Cr,
- max. 0,2 % de poids de Zr,
- max. 0,2 % de poids de Sc,
- max. 0,2 % de poids de Hf,
- max. 0,2 % de poids de V,
la somme des éléments Cr, Zr, Sc, Hf et V ne dépassant pas 0,3 % de poids, le reste en Al auxquels s'ajoutent les inévitables impuretés.

2. Tube selon la revendication 1, **caractérisé en ce que** la composition de l'alliage d'Al du tube (1) en métal léger présente la composition suivante :
- 3,5 à 4,5 % de poids de Cu,
- 0,2 à 0,8 % de poids de Mg,
- 0,8 à 1,3 % de poids de Li,
- 0,1 à 0,4 % de poids de Mn,
- 0,02 à 0,07 % de poids de Ti,
- max. 0,15 % de poids de Si,
- max. 0,15 % de poids de Fe,
- max. 0,5 % de poids d'Ag,
le reste en Al auxquels s'ajoutent les inévitables impuretés.

3. Tube selon la revendication 1 ou 2, **caractérisé en ce que** la composition de l'alliage d'Al du tube en métal léger présente une teneur en Ag de 0,2 à 0,5 % de poids.

4. Tube selon l'une des revendications 1 à 3, **caractérisé en ce que** l'alliage d'Al du tube (1) en métal léger présente la composition suivante :
- 3,0 à 3,5 % de poids de Cu,
- 0,28 à 0,25 % de poids de Mg,
- 0,9 à 1,2 % de poids de Li,
- 0,28 à 0,40 % de poids de Mn,
- 0,035 à 0,06 % de poids de Ti,
- max. 0,15 % de poids de Si,
- max. 0,15 % de poids de Fe,
le reste en Al auxquels s'ajoutent les inévitables impuretés.

5. Tube selon l'une des revendications 1 à 4, **caractérisé en ce que** le tube a été étiré dans son tronçon avec une épaisseur de paroi la plus faible d'au moins 2 à 2,5 %, de préférence même d'au moins 3,5 %.

6. Tube selon l'une des revendications 1 à 5, **caractérisé en ce que** le tube (1) en métal léger présente à ses deux extrémités un tronçon avec une épaisseur de paroi (A₃) plus importante, les tronçons avec une épaisseur de paroi (A₃) plus importante étant séparés par un tronçon avec une épaisseur de paroi (A₂) plus faible et des tronçons de transition étant prévus entre les tronçons avec une épaisseur de paroi (A₃) plus importante et ceux avec une épaisseur de paroi (A₂) plus faible, dans lesquels la transition d'une épaisseur de paroi d'un tronçon à un autre se fait de façon continue.

7. Tube selon la revendication 6, **caractérisé en ce qu'**il est prévu entre les deux tronçons d'extrémité avec une épaisseur de paroi (A₃) plus importante, au moins un autre tronçon avec une épaisseur de paroi (A₁) plus importante, lequel tronçon avec une épaisseur de paroi (A₁) plus importante passe par un tronçon de transition jusqu'au tronçon voisin avec une épaisseur de paroi (A₂) plus faible.

8. Tube selon la revendication 6, **caractérisé en ce que** les accouplements sont usinés dans les tronçons d'extrémité du tube (1) en métal léger.

9. Tube selon l'une des revendications 1 à 8, **caractérisé en ce que** celui-ci est un tube de forage destiné à former une tige de forage.

10. Procédé pour fabriquer un tube (1) en métal léger pour un tube selon l'une des revendications 1 à 9, **caractérisé en ce que** le tube (1) en métal léger est réalisé par filage et qu'il est ensuite soumis à un recuit de mise en solution, et **en ce que** le tube filé est ensuite étiré sur toute sa longueur et ce au point que le ou les tronçons avec une épaisseur de paroi la plus faible (A₂) soient étirés d'au moins 2 à 2 ,5 % et que le tube (1) en métal léger étiré est exposé à la chaleur au cours d'une étape suivante du processus, à une température comprise entre 164 °C et 180 °C.

11. Procédé selon la revendication 10, **caractérisé en ce que** le tube (1) en métal léger filé est étiré d'au moins 3,5 %, notamment d'environ 4 à 4,5 % ou plus dans ses tronçons avec une épaisseur de paroi la plus faible (A2).

12. Procédé selon la revendication 10 ou 11, **caractérisé en ce que** le tube (1) en métal léger étiré est exposé à la chaleur pendant environ 24 à 45 heures et notamment pendant 30 à 40 heures.

13. Procédé selon l'une des revendications 10 à 12, **caractérisé en ce que** l'exposition à la chaleur du tube (1) en métal léger étiré est réalisé dans une fenêtre de température située entre 168 °C et 172 °C, notamment à 170 °C pendant 32 à 38 heures, notamment pendant environ 36 heures.
